# EUROPÄISCHE PATENTSCHRIFT

(11) **EP 0 685 512 B1**
(45) Veröffentlichungstag und Bekanntmachung des Hinweises auf die Patenterteilung: **16.08.2000**
(21) Anmeldenummer: 95107325.3
(22) Anmeldetag: 15.05.1995
(51) Int. Cl.: C08J 9/38, C08J 9/40, B29C 44/56, F16L 59/08

(54) **Verfahren zur Herstellung offenzelliger Polyurethan-Hartschaumstoffe**
Process for producing open-celled rigid polyurethane foams
Procédé de préparation de mousses rigides de polyuréthane à cellules ouvertes

(30) Priorität: 27.05.1994 DE 4418507
(43) Veröffentlichungstag der Anmeldung: 06.12.1995
(73) Patentinhaber: BAYER AG, 51368 Leverkusen (DE)
(72) Erfinder: Welte, Rainer, Dr., D-51373 Leverkusen (DE); Scholl, Hans-Joachim, Dr., D-51061 Köln (DE)

(56) Entgegenhaltungen:
- EP-A- 0 184 415
- EP-A- 0 231 820
- DD-A- 139 265
- GB-A- 2 040 948
- US-A- 5 083 361

## Beschreibung

Die Erfindung betrifft ein neues Verfahren zur Herstellung von offenzelligen Hartschaumstoffen und deren Verwendung als Füllstoffmaterial für a) den Bereich der Vakuumisoliertechnik, oder b) für den Bereich gasdicht verschlossener, gasgefüllter Schaumstoffe.

Verfahren zur Herstellung von offenzelligen Polyurethan-Hartschaumstoffen sind in jüngerer Zeit mehrfach beschrieben worden, weil - bedingt durch den erforderlichen Ersatz der Fluorchlorkohlenwasserstoffe (FCKW) - neue Isoliertechniken immer häufiger untersucht und auch praktisch verwendet werden.

So beschreibt EP-A 0 188 806 die Herstellung von offenzelligen Polyurethan-Hartschaumstoffen als Bestandteil der Herstellung von Vakuumpaneelen durch Umsetzung spezieller Isocyanate mit speziellen Polyolen unter Mitverwendung spezieller Stabilisatoren unter Mitverwendung von Zellöffnern und Monofluortrichlormethan (R 11) als Treibmittel. Wegen der vermuteten Ozonsehädigung durch R 11 lehrt EP-A 0 581 191 ein Herstellungsverfahren unter Verwendung von Treibmittein vom Typ der HFCKW oder von Methylenchlorid. Es wurde jedoch auch nach Verfahren gesucht, die auf jede Art von Treibmittein verzichten. Lufteigene Stoffe wie Sauerstoff, Stickstoff oder Kohlendioxid sollten in anderen Verfahren die einzigen Gase sein, die während eines Produktionsprozesses in die Atmosphäre entlassen werden.

Dies gelingt nach EP-A 0 567 027, indem als Treibmittel CO₂ aus Wasser verwendet wird. Allerdings sind so selbst mit speziellen Rezepturen nur Offenzelligkeiten von maximal 90 bis 96 % zu erzielen. Diese Werte sind für die Vakuumpaneel-Technologie absolut unzureichend, wie beispielsweise in EP-A 0 581 191, Seite 3, begründet wird. Sind nämlich auch nur sehr geringe Restgasmengen im Schaumstoff vorhanden, so wird ein evakuiertes Paneel mit einem Restgehalt von auch nur 1 % oder auch nur 0,1 % durch Diffusion im Laufe der Zeit das Hochvakuum verlieren.

Die DD-A-139 265 beschreibt ein Verfahren zur Verdichtung einer porösen Masse unter Druckanwendung, die zu einer starken Volumenverringerung der so behandelten porösen Masse führt.

Die GD-A-2 040 948 offenbart ein Verfahren zur Herstellung eines schalldämmenden Materials, bei dem ein geschäumtes Material zwischen Rollen und Platten unter Formänderung verdichtet wird.

Der Erfindung lag daher die Aufgabe zugrunde, ein Verfahren zur Herstellung vollständig offenzelliger Polyurethan-Haartschaumstoffe zur Verfügung zu stellen, das von konventionellen Polyurethan-Hartschaumstoffen ausgeht, gleichgültig, ob diese ganz oder teilweise geschlossenzellig oder sogar weitgehend offenzellig sind. Weiter lag der Erfindung die Aufgabe zugrunde, zur Herstellung entsprechender Schaumstoffe die volle Breite üblicher Polyurethanrohstoffe verfügbar zu machen und nicht nur auf einen speziellen Teil dieser Rohstoffe oder auf spezielle Hilfsmittel beschränkt zu sein.

Wie überrasehenderweise gefunden wurde, konnte diese Aufgabe erfindungsgemäß gelöst werden.

Gegenstand der Erfindung ist ein Verfahren zur Herstellung offenzelliger Polyurethan-Hartschaumstoffe dadurch gekennzeichnet, daß geschlossenzellige oder teilweise geschlossenzellige Polyurethan-Hartschaumstoffe durch Anwendung äußeren Drucks in offenzellige Polyurethan-Hartschaumstoffe überführt werden, wobei der Schaumstoff nicht kollabiert und die Offenzelligkeit durch Rißbildung in den Zellwänden resultiert und die Herstellung des geschlossenzelligen oder teilweise geschlossenzelligen Polyurethan-Hartschaumstoffes in an sich bekannter Weise innerhalb einer Form erfolgt, wobei die Form mit einer gasundurchlässigen Folie ausgelegt sein kann und anschließend der Schaumstoff innerhalb der Form durch Anwendung äußeren Drucks geöffnet wird.

Erfindungsgemäß ist bevorzugt, daß die Herstellung des geschlossenzelligen oder teilweise geschlossenenzelligen Polyurethan-Hartschaumstoffes in an sich bekannter Weise innerhalb einer Form erfolgt, wobei die äußere Begrenzung der Form gleichzeitig als gasundurchlässige Folie ausgebildet sein kann und anschließend der Schaumstoff innerhalb der Form durch Anwendung äußeren Drucks geöffnet wird.

Die Erfindung betrifft auch die der erfindungsgemäß erhältlichen offenzelligen Polyurethan-Hartschaumstoffe
- als Füllmaterial in evakuierten Isolierpaneelen, wobei die Schaumstoffe vor der Evakuierung mit einer gasundurchlässigen Folie aus Kunststoff oder Metall oder aus Verbundfolien aus Kunststoff oder Kunststoffen und Metall oder Metallen umhüllt werden,
- als schrumpfstabile Isolierschaumstoffe,
- als Füllmaterial, das in einem gasdichten Isolierpaneel, das zunächst evakuiert und danach mit einem isolierenden Gas, das schwerer als Luft ist, gefüllt wird, wobei vorzugsweise ein solches schweres isolierendes Gas verwendet wird, das im wesentlichen im Zeilmaterial unlöslich ist,
- als Isoliermaterial in Kühlschränken, in Kühlfahrzeugen, in Tiefkühltruhen, Tiefkühlfahrzeugen Containern, Tiefkühltheken, Kühltheken, Heißwasserbehältern, Behältern des Industriebaus, der Fernwärmeindustrie.

Die Erfindung betrifft auch
- ein evakuiertes Isolierpaneel, bestehend aus a) einem offenzelligen Polyurethan-Hartschaumstoff, erhältlich nach dem erfindungsgemäßen Verfahren und b) einer gasundurchlässigen Umhüllungsfolie aus b1) Kunststoff oder Metall oder b2) aus einer Verbundfolie aus Kunststoff oder Kunststoffen und Metall oder Metallen,
- ein mit einem isolierenden Gas, das schwerer als Luft ist, gefülltes Isolierpaneel, bestehend aus a) einem offenzelligen Polyurethan-Hartschaumstoff, erhältlich nach dem erfindungsgemäßen Verfahren und b) einer gasundurchlässigen Umhüllungsfolie aus b1) Kunststoff oder Metall oder b2) aus einer Verbundfolie aus Kunststoff oder Kunststoffen und Metall oder Metallen,
- die Verwendung der erfindungsgemäßen, o.g. Isolierpaneele als Isoliermaterialien.

Es muß als äußerst überraschend gewertet werden, daß bei der erfindungsgemäßen Druckbehandlung der Schaumstoff nicht kollabiert, sondern lediglich die gewünschte, vollkommene Offenzelligkeit durch Rißbildung in den Zellwänden resultiert, die Zellwände also noch - und zwar durch Risse geöffnet -, vorhanden sind. Im Gegensatz hierzu werden bei Herstellungsprozessen von offenzelligen Polyurethan-Schaumstoffen nach dem Stand der Technik die Zellwände im letzten Teil des Aufschäumprozesses durch "Abblasen" zerstört. Als Resultat dieser unterschiedlich erzeugten Offenzelligkeiten ergeben sich unterschiedliche Dämmeigenschaften der Schaumstoffe. Sind Zellwände - zwar durch Risse geöffnet - vorhanden, so wird die effektive freie Weglänge des Zellgases vornehmlich auf den Zelldurchmesser beschränkt, mit der Folge einer vergleichsweise verbesserten Dämmwirkung. Daher ist gerade bei der Verwendung der erfindungsgemäßen Schaumstoffe in der Vakuumpaneel-Technik diese Art der Offenzelligkeit (Risse in den Zellwänden) von herausragender Bedeutung.

Die erfindungsgemäßen offenzelligen Polyurethan-Hartschaumstoffe können jedoch auch als Isoliermaterialien in Paneelen bei Normaldruck oder im Bereich zwischen Hochvakuum und Normaldruck verwendet werden, wenn die Zellen durch ein Schwergas (d.h. ein Gas, das schwerer als Luft ist) gefüllt sind, z.B. durch schwere Edelgase oder organische leichtflüchtige Gase oder FCKW's oder Fluorkohlenwasserstoffe.

Während die FCKW-Treibmittel in üblichen Isolierstoffen nicht mehr verwendet werden dürfen, weil sie durch Diffusion oder durch die Vernichtung bei der Entsorgung der Altgeräte in die Erdatmosphäre gelangen, können sie in offenzelligen Schaumstoffen in Verbindung mit gasdichten Außenhüllen ohne Probleme eingesetzt werden, weil die Produkte bei der Entsorgung problemlos durch Evakuierung von den Schwergasen befreit werden können.

Ausgangsmaterialien sind die bereits oben genannten konventionellen Polyurethan-Hartschaumstoffe. Eine Übersicht zu ihrer Herstellung wird beispielsweise im Kunststoff-Handbuch, Band VII, "Polyurethane", herausgegeben von G. Oertel (Verlag Carl Hanser, München 1993), Seiten 267 ff, gegeben.

Hierbei Handelt es sich um geschlossenzellige oder teilweise geschlossenzellige Hartschaumstoffe mit Rohdichten in der Regel im Bereich von 20 bis 200 kg/m³, vorzugsweise 30 bis 100 kg/m³.

Die erfindungsgemäße Überführung in entsprechende, vollkommen offenzellige Polyurethan-Hartschaumstoffe erfolgt, wie ausgeführt, durch Anwendung äußeren Drucks, z.B. in Druckkammern. Die Höhe des anzuwendenden Drucks und die Zeit der Anwendung hängen vom jeweils eingesetzten Ausgangs-Hartschaumstoff ab und sind für jeden Typ am einfachsten in einem Vorversuch zu ermitteln. In der Regel reichen Drücke von 2 bis 20 bar 2·10⁵ bis 2·10⁶Pa bei Anwendungszeiten von 1 bis 60 sec aus.

### Beispiel 1

Ein konventioneller Polyurethan-Hartschaum der Rohdichte 50 kg/m³ mit einer Geschlossenzelligkeit von >90 % wurde 5 Sekunden einem Überdrück von 1 bar (10⁵Pa) ausgesetzt. Die dann gefundene Offenzelligkeit betrug >96 %, was im Rahmen der Maßgenauigkeit einer vollständigen Offenzelligkeit entspricht. Auch längere Verweilzeiten von 10 Sekunden, 2 Minuten, 10 Minuten oder 30 Minuten ergaben dieselben Werte.

### Beispiel 2

Derselbe Schaumstoff wie in Beispiel 1 wird einem Druck von 10 bar (10⁶Pa) ausgesetzt, wobei der Druckanstieg bei einer ersten Probe innerhalb von 5 Sekunden, bei einer zweiten Probe innerhalb von 2 Minuten, bei einer dritten Probe von 30 Minuten erfolgte. Alle drei Proben zeigten nach der Versuchsdurchführung dieselbe Offenzelligkeit von >96 %.

### Beispiel 3

Konventioneller Hartschaumstoffe der Rohdichten 24 kg/m³ und 34 kg/m³ mit einer Geschlossenzelligkeit von >90 % wurden innerhalb von 5 Sekunden mit einem Druck von 10 bar (10⁶Pa) beaufschlagt, wobei der Druck 10 Minuten aufrechterhalten wird. Die Schaumstoffe zeigten nach dem Versuch Offenzelligkeiten von >96 %.

## Patentansprüche

1. Verfahren zur Herstellung offenzelliger Polyurethan-Hartschaumstoffe dadurch gekennzeichnet, daß geschlossenzellige oder teilweise geschlossenzellige Polyurethan-Hartschaumstoffe durch Anwendung äußeren Drucks in offenzellige Polyurethan-Hartschaumstoffe überführt werden, wobei der Schaumstoff nicht kollabiert und die Offenzelligkeit durch Rißbildung in den Zellwänden resultiert und die Herstellung des geschlossenzelligen oder teilweise geschlossenzelligen Polyurethan-Hartschaumstoffes in an sich bekannter Weise innerhalb einer Form erfolgt, wobei die Form mit einer gasundurchlässigen Folie ausgelegt sein kann und anschließend der Schaumstoff innerhalb der Form durch Anwendung äußeren Drucks geöffnet wird.

2. Verwendung der nach Anspruch 1 hergestellten offenzelligen Polyurethan-Hartschaumstoffe als Füllmaterial in evakuierten Isolierpaneelen, dadurch gekennzeichnet, daß die offenzelligen Schaumstoffe vor der Evakuierung mit einer gasundurchlässigen folie aus Kunststoff oder Metall oder aus Verbundfolien aus Kunststoff oder Kunststoffen und Metall oder Metallen umhüllt wird.

3. Verwendung der gemäß Anspruch 1 erhältlichen offenzelligen Polyurethan-Hartschaumstoffe als schrumpfstabile Isolierschaumstoffe.

4. Verwendung der gemäß Anspruch 1 erhältlichen offenzelligen Polyurethan-Hartschaumstoffe als Füllmaterial in einem gasdichten Isolierpaneel, das zunächst evakuiert und danach mit einem isolierenden Gas, das schwerer als Luft ist, gefüllt wird.

5. Verwendung gemäß Anspruch 4, dadurch gekennzeichnet, daß ein solches schweres isolierendes Gas verwendet wird, das im wesentlichen im Zellmaterial unlöslich ist.

6. Verwendung der gemäß Anspruch 6 erhältlichen offenzelligen Hartschaumstoffe als Isoliermaterial in Kühlschränken, in Kühlfahrzeugen in Tiefkühltruhen, Tiefkühlfahrzeugen, Containern, Tiefkühltheken, Kühltheken, Heißwasserbehältern, Behältern des Industriebaus, der Fernwärmeindustrie.

7. Evakuiertes Isolierpaneel, bestehend aus a) einem offenzelligen Polyurethan-Hartschaumstoff, erhältlich nach dem Verfahren gemäß Anspruch 1 und b) einer gasundurchlässigen Umhüllungsfolie aus b1) Kunststoff oder Metall oder b2) aus einer Verbundfolie aus Kunststoff oder Kunststoffen und Metall oder Metallen.

8. Mit einem isolierenden Gas, das schwerer als Luft ist, gefülltes Isolierpaneel, bestehend aus a) einem offenzelligen Polyurethan-Hartschaumstoff, erhältlich nach dem Verfahren gemäß Anspruch 1 und b) einer gasundurchlässigen Umhüllungsfolie aus b1) Kunststoff oder Metall oder b2) aus einer Verbundfolie aus Kunststoff oder Kunststoffen und Metall oder Metallen.

9. Verwendung der Isolierpaneele gemäß Ansprüchen 7 und 8 als Isoliermaterialien.

## Claims

1. Process for the production of open-cell rigid polyurethane foams, characterised in that closed-cell or partially closed-cell rigid polyurethane foams are converted into open-cell rigid polyurethane foams through the application of external pressure, there being no breakdown of the foam and the open-cell character resulting from crack formation in the cell walls, and the production of the closed-cell or partially closed-cell rigid polyurethane foam is carried out inside a mould in a manner known per se, with the mould being coverable by a gastight film, and the foam is subsequently opened inside the mould through the application of external pressure.

2. Use of the open-cell rigid polyurethane foams produced according to claim 1 as filling material in evacuated insulating panels, characterised in that prior to evacuation, the open-cell foams are coated with a gastight film made of plastic or metal or of composite films of plastic or plastics and metal or metals.

3. Use of the open-cell rigid polyurethane foams obtainable according to claim 1 as shrink-resistant insulating foams.

4. Use of the open-cell rigid polyurethane foams obtainable according to claim 1 as filling material in a gastight insulating panel, which is first evacuated and then filled with an insulating gas which is heavier than air.

5. Use according to claim 4, characterised in that a type of heavy insulating gas is used which is substantially insoluble in the cell material.

6. Use of the open-cell rigid foams obtainable according to claim 6 as insulating material in refrigerators, in refrigerator vehicles, in freezers, freezing vehicles, containers, freezing counters, cooling counters, hot water containers and containers in industrial construction and in the heat-distributing industry.

7. Evacuated insulating panel consisting of a) an open-cell rigid polyurethane foam obtainable by the process according to claim 1 and b) a gastight coating film made of b1) plastic or metal or b2) made of a composite film of plastic or plastics and metal or metals.

8. Insulating panel filled with an insulating gas which is heavier than air, which insulating panel consists of a) an open-cell rigid polyurethane foam, obtainable by the method according to claim 1 and b) a gastight coating film made of b1) plastic or metal or b2) made of a composite film of plastic or plastics and metal or metals.

9. Use as insulating materials of the insulating panels according to claims 7 and 8.

## Revendications

1. Procédé pour la fabrication de mousses rigides de polyuréthanne à cellules ouvertes, caractérisé en ce que l'on fait passer des mousses rigides de polyuréthanne à cellules fermées en totalité ou en partie à l'état de mousses rigides de polyuréthanne à cellules ouvertes par application d'une pression extérieure sans affaissement de la mousse, l'ouverture des cellules résultant de la formation de fissures dans les parois cellulaires, la fabrication de la mousse rigide de polyuréthanne à cellules fermées en totalité ou en partie étant réalisée de manière connue en soi dans un moule, lequel peut être garni d'une feuille étanche aux gaz, et les cellules de la mousse étant ensuite ouvertes dans le moule par application d'une pression extérieure.

2. Utilisation des mousses rigides de polyuréthanne à cellules ouvertes fabriquées selon la revendication 1, en tant que matériaux de garnissage dans des panneaux isolants sous vide, caractérisée en ce que, avant application du vide, les mousses à cellules ouvertes sont enveloppées d'une feuille étanche aux gaz en résine synthétique ou en métal ou d'une feuille composite consistant en une résine synthétique ou plusieurs résines synthétiques et un métal ou plusieurs métaux.

3. Utilisation des mousses rigides de polyuréthanne à cellules ouvertes fabriquées selon la revendication 1, en tant que mousses isolantes résistant à la rétraction.

4. Utilisation des mousses rigides de polyuréthanne à cellules ouvertes fabriquées selon la revendication 1, en tant que matériau de garnissage dans un panneau isolant étanche aux gaz qui est d'abord mis sous vide puis garni d'un gaz isolant plus lourd que l'air.

5. Utilisation selon la revendication 4, caractérisée en ce que l'on utilise un gaz lourd isolant essentiellement insoluble dans le matériau des cellules.

6. Utilisation des mousses rigides à cellules ouvertes fabriquées selon la revendication 6, en tant que matériaux isolants dans des réfrigérateurs, des véhicules réfrigérants, des chambres frigorifiques, des véhicules frigorifiques, des conteneurs, des armoires frigorifiques, des armoires réfrigérantes, des récipients d'eau chaude, des récipients de la construction industrielle, l'industrie du transport de chaleur.

7. Panneau isolant sous vide consistant en a) une mousse rigide de polyuréthanne à cellules ouvertes obtenue par le procédé selon la revendication 1 et b) une feuille d'enveloppe étanche aux gaz consistant elle-même en b1) une résine synthétique ou un métal ou b2) une feuille composite consistant en une ou plusieurs résines synthétiques et un métal ou plusieurs métaux.

8. Panneau isolant garni d'un gaz isolant plus lourd que l'air et qui consiste en a) une mousse rigide de polyuréthanne à cellules ouvertes obtenue par le procédé selon la revendication 1 et b) une feuille d'enveloppe étanche aux gaz en b1) une résine synthétique ou un métal ou b2) une feuille composite consistant en une résine ou plusieurs résines synthétiques et un métal ou plusieurs métaux.

9. Utilisation des panneaux isolants selon les revendications 7 et 8, en tant que matériaux isolants.
